# FASCICULE DE BREVET EUROPEEN

(11) **EP 3 685 070 B1**
(45) Date de publication et mention de la délivrance du brevet: **01.04.2026**
(21) Numéro de dépôt: 18768903.9
(22) Date de dépôt: 17.09.2018
(51) Int. Cl.: F16F 15/12, F16D 1/104

(54) **DISPOSITIF DE TRANSMISSION DE COUPLE, AMORTISSEUR DE TORSION ET ASSEMBLAGE ASSOCIE**
DREHMOMENTÜBERTRAGUNGSANORDNUNG, DREHSCHWINGUNGSDÄMPFER UND ENTSPRECHENDER ZUSAMMENBAU
TORQUE TRANSMISSION DEVICE, TORSIONAL DAMPER AND ASSOCIATED ASSEMBLY

(30) Priorité: 18.09.2017 FR 1758619
(43) Date de publication de la demande: 29.07.2020
(73) Titulaire: Valeo Embrayages, 80009 Amiens (FR)
(72) Inventeur: BOUCHENY, Pierre, 80009 Amiens (FR)
(74) Mandataire: Valeo Powertrain Systems
(86) Numéro de dépôt international: PCT/EP2018/075091
(87) Numéro de publication internationale: WO 2019/053267

(56) Documents cités:
- EP-A1- 3 150 881
- WO-A1-2007/045418
- WO-A1-2009/034274
- WO-A1-96/10138
- DE-T2- 69 702 994
- DE-U1- 8 425 598
- FR-A1- 2 746 472
- GB-A- 2 155 590
- JP-A- 2000 179 622

## Description

La présente invention concerne le domaine des dispositifs de transmission de couple comme les amortisseurs de torsion, notamment pour véhicules automobiles.

Les chaînes de transmission des véhicules automobiles comprennent plusieurs dispositifs, notamment un moteur, et une boîte de vitesses qui sont couplés en rotation les uns aux autres. Ce couplage mécanique est par exemple réalisé par des cannelures, l'un des éléments comprenant un arbre cannelé et l'autre élément comprenant un moyeu cannelé complémentaire. Un tel couplage mécanique est par exemple divulgué dans le document WO2007045418 A1.

Cependant, lorsque le véhicule est au point mort et qu'aucun couple n'est transmis par la chaîne de transmission, le jeu existant entre les cannelures tend à produire du bruit dû aux chocs entre les cannelures. Ce bruit peut se propager jusque dans l'habitacle et nuire au confort des utilisateurs.

Il convient donc de trouver une solution permettant de réduire ou de supprimer le bruit produit au niveau des cannelures complémentaires d'un arbre et d'un moyeu.

A cet effet, la présente invention concerne un dispositif de transmission de couple destiné à être disposé entre un moteur et une boîte de vitesses d'un véhicule automobile, le dispositif de transmission de couple comprenant un moyeu cannelé destiné à être emmanché sur un arbre cannelé complémentaire de la boîte de vitesses dans lequel le moyeu cannelé comprend une rainure annulaire au niveau de ses cannelures et dans lequel le dispositif comprend également un élément élastique destiné à être disposé dans la rainure annulaire et configuré pour venir en contact avec les cannelures de l'arbre cannelé de la boîte de vitesses.

Le moyeu cannelé comprend des dents s'étendant longitudinalement par rapport à l'axe de roation du dispositif de transmsision. Par rainure annulaire on entend une rainure formée par le moyeu qui s'étend circonférentiellement autour de l'axe de rotation du dispositif. La rainure annulaire s'étend perpendiculairement par raport aux dents du moyeu. La rainure annulaire s'étend au travers des dents. Ainsi, selon une direction parallèle à l'axe l'élément élastique inséré à l'intérieur de la rainure annulaire.

Selon un autre aspect de la présente invention, la rainure annulaire a une profondeur comprise entre 1 et 10 mm.

Selon un autre aspect de la présente invention, le diamètre de l'arbre cannelé (3) est compris entre 5 et 80 mm, voire entre 15 et 65 mm, notamment entre 20 et 45 mm.

Selon un autre aspect de la présente invention, l'élément élastique est en élastomère.

Selon un autre aspect de la présente invention, l'élément élastique est un joint torique.

Selon un autre aspect de la présente invention, l'élément élastique est une courroie cannelée dont les cannelures sont complémentaires des cannelures de l'arbre cannelé.

Selon un autre aspect de la présente invention, l'élément élastique (17, 47) est choisi parmi un joint torique, une courroie cannelée dont les cannelures sont complémentaires des cannelures de l'arbre cannelé (3).

Selon un autre aspect de la présente invention, l'élément élastique est une bague métallique ondulée radialement.

Selon un autre aspect de la présente invention, le couple de frottement créé par l'élément élastique est compris entre 20 et 30 Nm.

La présente invention concerne également un amortisseur de torsion comprenant un dispositif de transmission de couple tel que décrit précédemment.

Selon un autre aspect de la présente invention, l'amortisseur de torsion comprend un volant d'inertie primaire et un volant d'inertie secondaire formant un double volant amortisseur.

La présente invention concerne également un assemblage de transmission de couple comprenant :
- un premier élément comprenant un arbre cannelé,
- un deuxième élément comprenant un moyeu cannelé complémentaire de l'arbre cannelé,
dans lequel l'un du premier ou du deuxième élément comprend une rainure annulaire au niveau de ses cannelures et dans lequel le dispositif comprend également un élément élastique destiné à être disposé dans la rainure annulaire et configuré pour venir en contact avec les cannelures de l'autre du premier ou du deuxième élément.

D'autres caractéristiques et avantages de l'invention ressortiront de la description suivante, donnée à titre d'exemple et sans caractère limitatif, en regard des dessins annexés sur lesquels :
- la figure 1 représente une vue schématique selon une section axiale d'un amortisseur de torsion,
- la figure 2 représente une vue en coupe d'un assemblage entre un moyeu et un arbre de transmission comprenant un élément élastique selon un premier mode de réalisation,
- la figure 3 représente une vue en perspective d'un moyeu selon la présente invention,
- la figure 4a représente une vue en coupe d'un assemblage entre un moyeu et un arbre de transmission comprenant un élément élastique selon un deuxième mode de réalisation,
- la figure 4b représente une vue en perspective de l'élément élastique selon le deuxième mode de réalisation,
- la figure 5a représente une vue en coupe d'un assemblage entre un moyeu et un arbre de transmission comprenant un élément élastique selon un troisième mode de réalisation,
- la figure 5b représente une vue en perspective de l'élément élastique selon le troisième mode de réalisation,
- la figure 6 représente une vue selon une section axiale d'un dispositif de friction d'embrayage.

Sur toutes les figures, les éléments identiques ou assurant la même fonction portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

Dans la description suivante, les termes « premier », « second », « deuxième »...par exemple « première partie », « deuxième partie » sont utilisés pour un simple indexage des éléments pour dénommer et différencier des éléments proches mais non identiques. Cette indexation n'implique pas de priorité d'un élément par rapport à un autre et on peut aisément interchanger de telles dénominations sans sortir du cadre de la présente description. Cette indexation n'implique pas non plus un ordre dans le temps.

Dans la suite de la description, les termes « axial », « radial » et « transversal » pour définir l'orientation des éléments de l'amortisseur de torsion se rapportent à l'axe de rotation X de l'amortisseur de torsion et définissent respectivement une direction parallèle à l'axe de rotation X, un plan comprenant l'axe de rotation X et un plan perpendiculaire à l'axe de rotation X.

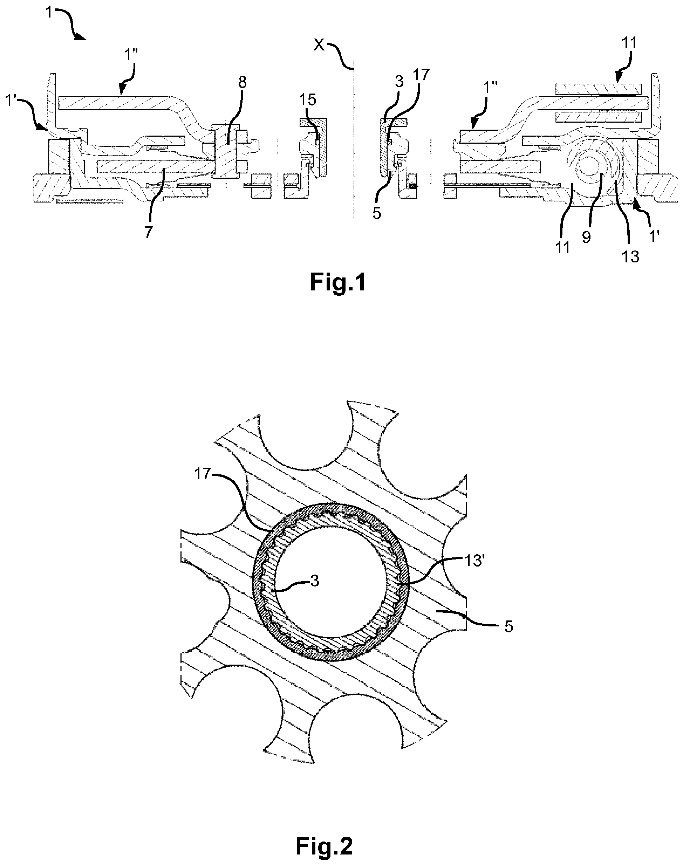

La présente invention concerne un dispositif de transmission de couple et notamment un amortisseur de torsion 1 d'un véhicule automobile tel que représenté sur la figure 1 destiné à être couplé à un arbre de transmission 3, par exemple d'une boîte de vitesses (non représentée). L'arbre de transmission 3 a par exemple un diamètre compris entre 15 et 65 mm. L'arbre de transmission 3 peut correspondre à l'arbre de la boîte de vitesses du véhicule automobile. L'amortisseur de torsion 1 est par exemple un double volant amortisseur et comprend un élément primaire ou volant primaire 1'. L'amortisseur de torsion 1 comprend également un voile 7 configuré pour venir comprimer un moyen élastique tel qu'un ressort hélicoïdal 9 lors d'une transmission de couple. Le voile 7 est par exemple fixé à un élément secondaire ou volant secondaire 1" et à un moyeu 5 par des rivets 8. Le moyeu 5 est destiné à être couplé à l'arbre de transmission 3. Le volant secondaire 1" étant monté rotatif par rapport à l'élément primaire 1'.

Alternativement, l'amortisseur de torsion 1 peut être dépourvu d'un volant secondaire 1", le voile 7 étant alors couplé en rotation seulement au moyeu 5 destiné à être couplé à l'arbre de transmission 3.

Le ressort hélicoïdal 9 est par exemple placé dans un logement 11 de l'élément primaire 1' de l'amortisseur de torsion 1. Le logement 11 peut également renfermer une goulotte 13 de maintien du ressort hélicoïdal 9. L'élément primaire 1' et l'élément secondaire 1" sont montés mobiles en rotation l'un par rapport à l'autre autour d'un axe de rotation X, par exemple via un palier (non représenté). L'élément secondaire 1" peut également comprendre un dispositif pendulaire 11 configuré pour améliorer la filtration des vibrations. En variante non représentée, le dispositif pendulaire peut être monté sur le voile 7.

Le couplage entre le moyeu 5 et l'arbre de transmission 3 est réalisé par des cannelures complémentaires 13 et 13' placées respectivement sur le moyeu 5 et sur l'arbre de transmission 3, les cannelures 13 du moyeu 5 étant emmanchées sur les cannelures 13' de l'arbre de transmission 3. Les cannelures 13' de l'arbre de transmission 3 sont mieux visibles sur la figure 2 qui représente une vue en coupe transversale du moyeu 5 et de l'arbre de transmission 3.

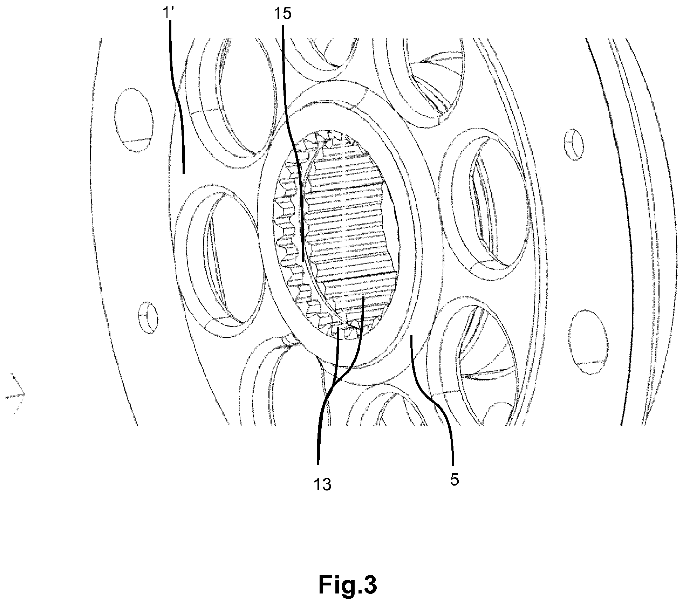

La figure 3 représente une vue en perspective des cannelures 13 du moyeu 5. Une gorge ou rainure annulaire 15 est ménagée dans le moyeu 5 au niveau des cannelures 13 comme représenté sur la figure 3. La rainure annulaire 15 peut être positionnée au sein des cannelures 13 (des cannelures 13 sont alors de part et d'autre de la rainure annulaire 15) comme représenté sur la figure 3 mais peut aussi être ménagée à une extrémité des cannelures 13. La rainure annulaire 15 est configurée pour recevoir un élément élastique et a une profondeur comprise entre 1 et 10 mm par exemple. L'élément élastique peut être un joint torique 17 comme représenté sur la figure 2. Le joint torique 17 est configuré pour venir en appui contre les cannelures 13' de l'arbre de transmission 3 pour créer un couple de frottements avec lesdites cannelures 13' de sorte à empêcher l'entrechoc entre les cannelures 13 du moyeu 5 et les cannelures 13' de l'arbre de transmission 3 lorsqu'aucun couple n'est transmis entre le moyeu 5 et l'arbre de transmission 3, notamment lorsque le véhicule automobile est au point mort. Le joint torique 17 peut également être configuré pour créer un couple de rotation élastique, le joint torique étant déformé pour venir au moins partiellement dans les cannelures 13. Le joint torique 17 est par exemple réalisé en matériau élastomère. De plus, un feuillard peut être disposé entre le joint torique 17 et les cannelures 13' de l'arbre de transmission 3 pour éviter une usure rapide du joint torique 17. Le feuillard est par exemple réalisé en matériau métallique et notamment en acier. Le couple de frottements généré par le joint torique 17 est par exemple compris entre 20 et 30 N.m.

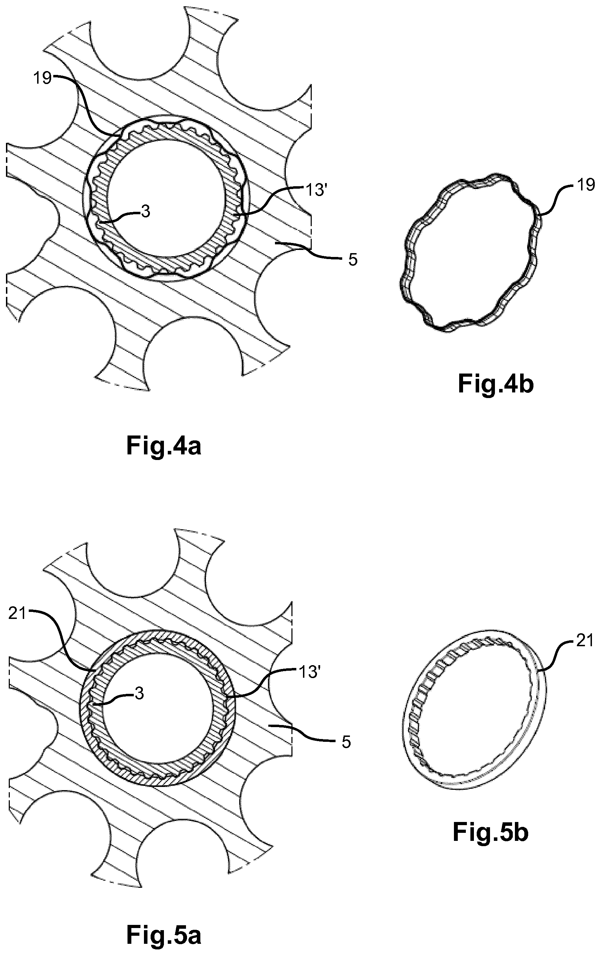

Alternativement, l'élément élastique peut également être réalisé par une bague métallique ondulée 19 configurée également pour venir en appui sur les cannelures 13' de l'arbre de transmission 3 pour créer un couple de frottements comme représenté sur les figures 4a et 4b qui représentent respectivement la bague métallique ondulée 19 montée sur l'amortisseur de torsion et seule. La bague métallique ondulée 19 est par exemple réalisée en acier. Le couple de frottements généré par la bague métallique ondulée 19 est par exemple compris entre 20 et 30 N.m.

Selon un autre mode de réalisation représenté sur les figures 5a et 5b, l'élément élastique peut être réalisé par une courroie élastique cannelée 21 dont les cannelures sont sensiblement complémentaires des cannelures 13' du moyeu 3. La courroie élastique cannelée 21 est par exemple réalisée en matériau élastomère et est configurée pour créer un couple de rotation élastique permettant d'éviter un entrechoc entre les cannelures 13 du moyeu 5 et les cannelures 13' de l'arbre de transmission 3 lorsqu'aucun couple n'est transmis entre le moyeu 5 et l'arbre de transmission 3, par exemple lorsque le véhicule automobile est au point mort.

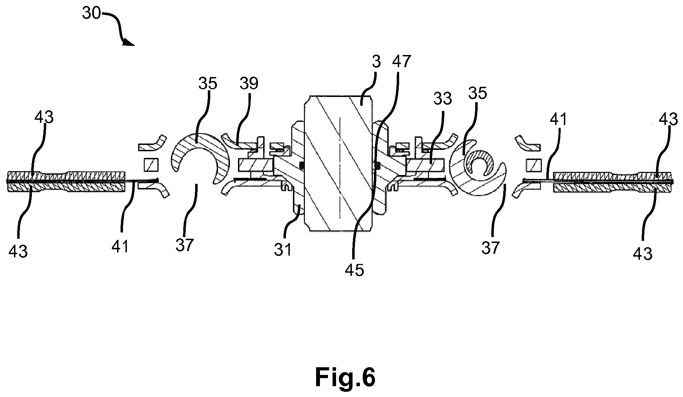

La présente invention ne se limite pas à un amortisseur de torsion mais à tout type de dispositif de transmission de couple comprenant un moyeu cannelé destiné à être emmanché sur un arbre de transmission cannelé comme par exemple un dispositif à friction d'embrayage 30 tel que représenté sur la figure 6.

Le dispositif à friction d'embrayage 30 comprend un moyeu cannelé 31 destiné à être monté sur un arbre de transmission cannelé 3. Un voile annulaire 33 est fixé sur le moyeu cannelé 31 et est configuré pour venir en appui sur un moyen élastique tel qu'un ou des ressort(s) hélicoïdal(aux) 35 configurés pour filtrer les vibrations et les à-coups transmis par le dispositif à friction d'embrayage 30. Le ressort hélicoïdal 35 est positionné dans un logement 37 d'un élément 39. L'élément 39 est monté rotatif sur le moyeu cannelé 31. Le dispositif à friction d'embrayage 30 comprend également un disque support 41 fixé sur l'élément 39 au niveau de sa partie interne et configuré pour être positionné entre des garnitures de friction 43 au niveau de sa partie externe. Le disque support 41 est lié en rotation aux garnitures 43. L'une des garnitures 43 est configurée pour interagir (au niveau de sa face opposée au disque support 41) avec un volant moteur (non représenté) et l'autre garniture 43 est configurée pour interagir (au niveau de sa face opposée au disque support 41) avec un plateau (non représenté) d'un mécanisme d'embrayage. De plus, le disque support 41 procure une élasticité dans la direction axiale ce qui procure de la progressivité et limite les à-coups lors des phases d'embrayage et de débrayage du dispositif à friction d'embrayage 30.

Comme dans le cas de l'amortisseur de torsion 1 décrit précédemment, le moyeu cannelé 31 comprend une rainure annulaire 45 au niveau de ses cannelures et le dispositif à friction d'embrayage 30 comprend un élément élastique 47 destiné à être positionné dans la rainure annulaire 45. L'élément élastique 47 peut être similaire aux éléments élastiques présentés précédemment pour l'amortisseur de torsion 1.

Alternativement, pour l'ensemble des modes de réalisation présentés précédemment, la rainure annulaire peut être ménagée au niveau des cannelures 13' de l'arbre de transmission 5, l'élément élastique étant alors configuré pour être positionné dans ladite rainure annulaire et pour venir en contact avec les cannelures 13 du moyeu 5 ou 31.

De plus, la présente invention concerne également un assemblage comprenant un premier élément comprenant un arbre cannelé 3 et un deuxième élément comprenant un moyeu cannelé 5, 31 complémentaire de l'arbre cannelé 3, le premier et le deuxième élément correspondant par exemple aux différents modes de réalisation décrits précédemment.

Ainsi, l'utilisation d'une rainure annulaire ménagée au niveau des cannelures d'un assemblage comprenant un arbre cannelé et un moyeu cannelé complémentaires et d'un élément élastique disposé dans la rainure annulaire et configuré pour venir en contact avec les cannelures de l'élément complémentaire permet de limiter les chocs entre les différentes cannelures lorsqu'aucun couple n'est transmis par l'assemblage et ainsi réduire le bruit produit par ces chocs.

## Revendications

1. Dispositif de transmission de couple (1, 30) destiné à être disposé entre un moteur et une boîte de vitesses d'un véhicule automobile, le dispositif de transmission de couple (5, 30) comprenant un moyeu cannelé (5, 31) destiné à être emmanché sur un arbre cannelé (3) complémentaire de la boîte de vitesses **caractérisé en ce que** le moyeu cannelé (5, 31) comprend une rainure annulaire (15, 45) au niveau de ses cannelures (13) et **en ce que** le dispositif comprend également un élément élastique (17, 19, 21, 47) destiné à être disposé dans la rainure annulaire (15, 45) et configuré pour venir en contact avec les cannelures de l'arbre cannelé (3) de la boîte de vitesses.

2. Dispositif (1, 30) selon la revendication 1 dans lequel la rainure annulaire (15, 45) a une profondeur comprise entre 1 et 10 mm.

3. Dispositif (1, 30) selon la revendication 1 ou 2 dans lequel le diamètre de l'arbre cannelé (3) est compris entre 5 et 80 mm, voire entre 15 et 65 mm, notamment entre 20 et 45 mm.

4. Dispositif (1, 30) selon l'une des revendications précédentes dans lequel l'élément élastique (17, 21, 47) est en élastomère.

5. Dispositif (1, 30) selon l'une des revendications précédentes dans lequel l'élément élastique (17, 47) est choisi parmi un joint torique, une courroie cannelée dont les cannelures sont complémentaires des cannelures de l'arbre cannelé (3).

6. Dispositif (1, 30) selon l'une des revendications 1 à 3 dans lequel l'élément élastique (19, 47) est une bague métallique ondulée radialement.

7. Dispositif (1, 30) selon l'une des revendications précédentes dans lequel le couple de frottement créé par l'élément élastique (17, 19, 21, 47) est compris entre 20 et 30 Nm.

8. Amortisseur de torsion (1) comprenant un dispositif de transmission de couple selon l'une des revendications précédentes.

9. Amortisseur de torsion (1) selon la revendication précédente comprenant un volant d'inertie primaire (1') et un volant d'inertie secondaire (1") formant un double volant amortisseur.

10. Assemblage de transmission de couple comprenant :
- un premier élément comprenant un arbre cannelé (3),
- un deuxième élément comprenant un moyeu cannelé (5, 31) complémentaire de l'arbre cannelé (3),
**caractérisé en ce que** l'un du premier ou du deuxième élément comprend une rainure annulaire (15, 45) au niveau de ses cannelures et **en ce que** le dispositif comprend également un élément élastique (17, 19, 21, 47) destiné à être disposé dans la rainure annulaire (15, 45) et configuré pour venir en contact avec les cannelures de l'autre du premier ou du deuxième élément.

## Patentansprüche

1. Drehmomentübertragungsvorrichtung (1, 30), die dazu bestimmt ist, zwischen einem Motor und einem Getriebe eines Kraftfahrzeugs angeordnet zu werden, wobei die Drehmomentübertragungsvorrichtung (5, 30) eine Keilnabe (5, 31) umfasst, die dazu bestimmt ist, auf eine komplementäre Keilwelle (3) des Getriebes aufgesteckt zu werden, **dadurch gekennzeichnet, dass** die Keilnabe (5, 31) eine Ringnut (15, 45) auf Höhe ihrer Keilnuten (13) umfasst und dass die Vorrichtung auch ein elastisches Element (17, 19, 21, 47) umfasst, das dazu bestimmt ist, in der Ringnut (15, 45) angeordnet zu werden und konfiguriert ist, um mit den Keilnuten der Keilwelle (3) des Getriebes in Kontakt zu kommen.

2. Vorrichtung (1, 30) nach Anspruch 1, wobei die Ringnut (15, 45) eine Tiefe zwischen 1 und 10 mm aufweist.

3. Vorrichtung (1, 30) nach Anspruch 1 oder 2, wobei der Durchmesser der Keilwelle (3) zwischen 5 und 80 mm, sogar zwischen 15 und 65 mm, insbesondere zwischen 20 und 45 mm liegt.

4. Vorrichtung (1, 30) nach einem der vorhergehenden Ansprüche, wobei das elastische Element (17, 21, 47) aus Elastomer besteht.

5. Vorrichtung (1, 30) nach einem der vorhergehenden Ansprüche, wobei das elastische Element (17, 47) ausgewählt ist aus einem O-Ring, einem Keilriemen, dessen Keilnuten komplementär zu den Keilnuten der Keilwelle (3) sind.

6. Vorrichtung (1, 30) nach einem der Ansprüche 1 bis 3, wobei das elastische Element (19, 47) ein radial gewellter Metallring ist.

7. Vorrichtung (1, 30) nach einem der vorhergehenden Ansprüche, wobei das durch das elastische Element (17, 19, 21, 47) erzeugte Reibungsmoment zwischen 20 und 30 Nm liegt.

8. Torsionsdämpfer (1), umfassend eine Drehmomentübertragungsvorrichtung nach einem der vorhergehenden Ansprüche.

9. Torsionsdämpfer (1) nach dem vorhergehenden Anspruch, umfassend ein primäres Schwungrad (1') und ein sekundäres Schwungrad (1"), die einen Zweimassenschwungrad bilden.

10. Drehmomentübertragungsanordnung, umfassend:
- ein erstes Element, das eine Keilwelle (3) umfasst,
- ein zweites Element, das eine zur Keilwelle (3) komplementäre Keilnabe (5, 31) umfasst,
**dadurch gekennzeichnet, dass** eines des ersten oder zweiten Elements eine Ringnut (15, 45) auf Höhe seiner Keilnuten umfasst und dass die Vorrichtung auch ein elastisches Element (17, 19, 21, 47) umfasst, das dazu bestimmt ist, in der Ringnut (15, 45) angeordnet zu werden und konfiguriert ist, um mit den Keilnuten des anderen des ersten oder zweiten Elements in Kontakt zu kommen.

## Claims

1. Torque transmission device (1, 30) intended to be arranged between an engine and a gearbox of a motor vehicle, the torque transmission device (5, 30) comprising a splined hub (5, 31) intended to be fitted onto a complementary splined shaft (3) of the gearbox **characterized in that** the splined hub (5, 31) comprises an annular groove (15, 45) at the level of its splines (13) and **in that** the device also comprises an elastic element (17, 19, 21, 47) intended to be arranged in the annular groove (15, 45) and configured to come into contact with the splines of the splined shaft (3) of the gearbox.

2. Device (1, 30) according to claim 1 in which the annular groove (15, 45) has a depth between 1 and 10 mm.

3. Device (1, 30) according to claim 1 or 2 in which the diameter of the splined shaft (3) is between 5 and 80 mm, or even between 15 and 65 mm, particularly between 20 and 45 mm.

4. Device (1, 30) according to any one of the preceding claims in which the elastic element (17, 21, 47) is made of elastomer.

5. Device (1, 30) according to any one of the preceding claims in which the elastic element (17, 47) is chosen from an 0-ring, a splined belt whose splines are complementary to the splines of the splined shaft (3).

6. Device (1, 30) according to any one of claims 1 to 3 in which the elastic element (19, 47) is a radially undulated metal ring.

7. Device (1, 30) according to any one of the preceding claims in which the friction torque created by the elastic element (17, 19, 21, 47) is between 20 and 30 Nm.

8. Torsion damper (1) comprising a torque transmission device according to any one of the preceding claims.

9. Torsion damper (1) according to the preceding claim comprising a primary flywheel (1') and a secondary flywheel (1") forming a dual mass flywheel.

10. Torque transmission assembly comprising:
- a first element comprising a splined shaft (3),
- a second element comprising a splined hub (5, 31) complementary to the splined shaft (3), **characterized in that** one of the first or second element comprises an annular groove (15, 45) at the level of its splines and **in that** the device also comprises an elastic element (17, 19, 21, 47) intended to be arranged in the annular groove (15, 45) and configured to come into contact with the splines of the other of the first or second element.
